# EUROPEAN PATENT APPLICATION

(11) **EP 2 594 737 A2**
(43) Date of publication of application: **22.05.2013**
(21) Application number: 12192711.5
(22) Date of filing: 15.11.2012
(51) Int. Cl.: F01C 21/00, F04C 18/356, F04C 23/00

(54) **Rotary Compressor and Manufacturing Method Thereof**

(30) Priority: 18.11.2011 KR 20110121146
(71) Applicant: Samsung Electronics Co., Ltd, Gyeonggi-do 443-742 (KR)
(72) Inventor: Lee, Jeong Bae, Gyeonggi-do (KR)
(74) Representative: Walaski, Jan Filip

(57) **Abstract**

A rotary compressor having a reduced vibration and noise thereof, and capable of minimizing the deformation of components to improve the performance and the reliability, thereby providing applications for various fields other than for an air conditioner

## Description

The present invention relates to a rotary compressor, and more particularly, to a rotary compressor having an enhanced support structure thereof.

In general, a compressor is an apparatus configured to compress a fluid such as air or refrigerant by applying a pressure thereon by receiving a power from a driving apparatus such as an electric motor and to discharge the compressed fluid, and is used in a product such as an air conditioner or a refrigerator.

A compressor is divided into a positive displacement-type compressor and a turbo-type compressor, and the positive displacement-type compressor includes a rotary compressor configured to compress a fluid by a roller that eccentrically rotates at an inside of a cylinder.

A rotary compressor is provided with a case including a sealed accommodating space at an inside thereof and having a suction hole and a discharging port, a driving portion installed at an inside the case, a compression portion connected to the driving portion and configured to compress a refrigerant, and an accumulator communicating with the compression portion while being connected to the suction port of the case.

At this time, a suction pipe is connected to one side of the case to receive a fluid from the accumulator, and the suction pipe is welded to the suction port of the case.

The compression portion is fixed by welding, and the driving portion is press-fitted to the case as the compression portion is fixed by welding. At this time, the aligning of the compression portion and the driving portion may be twisted, and in a case when the aligning is twisted, the performance of the compressor is decreased and noise is developed from the compressor. In addition, as the driving portion is press-fitted to the case, the noise and vibration of the driving portion and compression portion are delivered to the case, thereby resulting in greater noise and vibration when compared to other types of compressors.

Therefore, it is an aspect of the present disclosure to provide a rotary compressor capable of improving the performance thereof and reducing noise and vibration thereof.

Additional aspects of the disclosure will be set forth in part in the description which follows and, in part, will be apparent from the description, or may be learned by practice of the disclosure.

In accordance with one aspect of the present disclosure, a rotary compressor includes a case, a driving portion, a compression portion, a fastening portion and a supporting portion. The case may form an external appearance of the rotary compressor. The driving portion may be provided at an inner side of the case, and have a stator fixed to the case, a rotator rotatively provided at an inside the stator, and a rotary shaft that is press-fitted the rotator. The compression portion may be provided at an inner side of the case, and have an eccentric portion provided at a lower portion of the rotary shaft, a roller rotatively inserted into an outer side of the eccentric portion, a cylinder accommodating the roller and provided for a compression chamber to be formed therein, and a vane configured to divide the compression chamber. The fastening member may be configured to connect the driving portion to the compression portion. The supporting member may be configured to connect the compression portion to the case to support the compression portion.

The supporting member may include a first elastic member to support the compression portion, and a second elastic member to connect the fastening member to the case. The supporting member may be a damper configured to couple the fastening member to the case and to absorb vibration.

The rotary compressor may further include an upper portion bearing coupled to an upper portion of the cylinder and configured to support the rotary shaft, and a lower bearing coupled to a lower portion of the cylinder and configured to support the rotary shaft. One of both sides of the fastening member is coupled to the stator of the driving portion.

The other side of the fastening member may be coupled to the upper portion bearing. The other side of the fastening member may be coupled to the cylinder.

At least one portion of the fastening member may be provided with a hole used as a channel of refrigerant.

The rotary compressor may further include an accumulator configured to filter a liquefied refrigerant, and a suction tube configured to supply refrigerant gas from the accumulator to the compression portion. The suction tube may be formed with flexible material to prevent vibration and noise of the compression portion from being delivered to the case.

The rotary compressor may further include a suction tube to supply refrigerant gas to the compression portion. The suction tube may be formed in an elongated manner so that the suction tube is bent at an inside the case to prevent noise and vibration of the compression portion from being delivered to the case.

In accordance with another aspect of the present disclosure, a method of manufacturing a rotary compressor having a case forming an external appearance of the rotary compressor, a compression portion and a driving portion therein is as follows.

The compression portion is assembled. A rotator of the driving portion is inserted into a rotary shaft. The driving portion is assembled to the compression portion by inserting a fixation member configured to maintain a distance in between the rotator and a stator of the driving portion. The stator of the driving portion is assembled to a fastening member, which connects the driving portion to the compression portion. The compression portion may be fastened to the fastening member. The fixation member may be separated from the driving portion. An assembly of the driving portion and the compression portion is mounted to an elastic member at an inside of the case.

The fastening member may be assembled to a cylinder provided at the compression portion.

The fastening member may be assembled to an upper portion bearing provided at the compression portion.

The fasten member may be fastened through a press-fitting using heat.

The fastening member may be fastened by a coupling member.

As described above, vibration and noise of a rotary compressor may be reduced, thereby enhancing the performance and reliability of the compressor. Accordingly, a rotary compressor may be used for various fields other than for an air conditioner. These and/or other aspects of the disclosure will become apparent and more readily appreciated from the following description of the embodiments, taken in conjunction with the accompanying drawings of which:
FIG. 1 is a drawing illustrating a rotary compressor in accordance with one embodiment of the present invention;
FIG. 2 is a drawing illustrating a rotary compressor in accordance with another embodiment of the present invention; and
FIG. 3 is a drawing illustrating a rotary compressor in accordance with still another embodiment of the present invention.

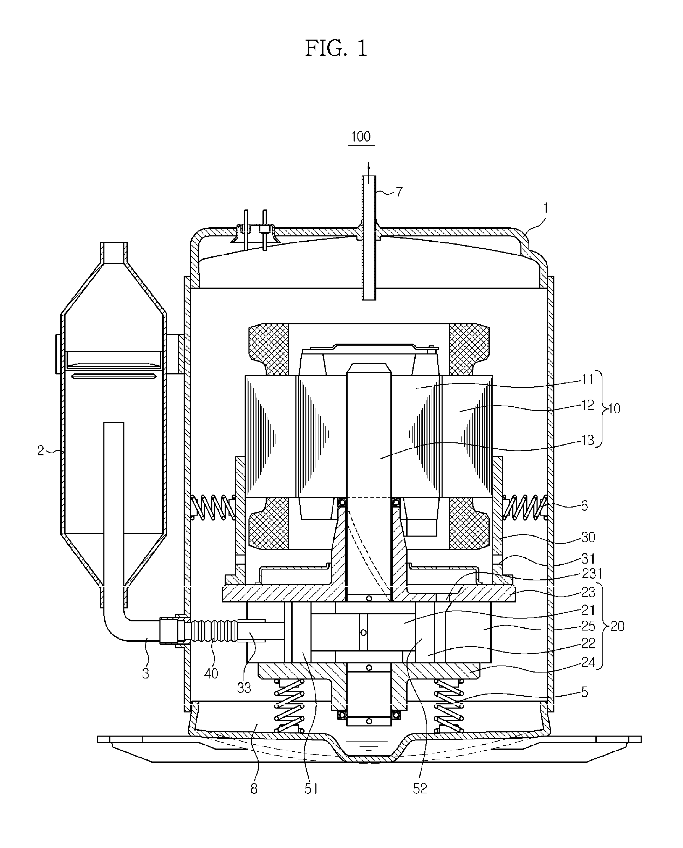

As illustrated on FIG. 1, a rotary compressor 100 according to the embodiment of the present invention includes a case 1 forming an exterior, a driving portion 10 to generate a driving power, and a compression portion 20 to compress refrigerant gas by receiving the driving power of the driving portion 10. The driving portion 10 and the compression portion 20 are installed at an inside of the case 1 which is sealed and has the shape of a cylinder.

One side of a lower portion of the case 1 is connected to a suction tube 40 that is configured to supply refrigerant gas from an accumulator 2 to the compression portion 20. The accumulator 2 is configured to filter a liquefied refrigerant. An upper portion of the case 1 is provided with a discharging portion 7 installed thereto to discharge the refrigerant gas that is compressed at the compression portion 20. The discharging portion 7 may be formed in a shape of a tube, and is connected to an outside of the case 1. A lower portion of the case 1 is provided thereon with an oil storage space 8 in which a certain amount of oil is filled for the lubrication and the cooling of a member in friction motion.

A supporting member is provided on a lower portion of the case 1 to support an assembly of the compression portion 20 and the driving portion 10. A first elastic member 5 is illustrated on FIG. 1 as an example of the supporting member, but is not limited hereto, and a damper may be installed on the lower portion of the case 1. A supporting member may be provided on a lateral side of the case 1 to support an assembly of the compression portion 20 and the driving portion 10. A second elastic member 6 is illustrated on FIG. 1 as an example of the supporting member to support the compression portion 20 and the driving portion 10, but not limited hereto, and a damper may be installed on the lateral side of the case 1. In addition, both the first elastic member 5 and the second elastic member 6 are not needed to be provided, and one of the first elastic member 5 and the second elastic member 6 may be provided to reduce vibration, and the change of the position of the first elastic member 5 and the second elastic member 6 may be possible.

The first elastic member 5 and the second elastic member 6 are mounted to the case 1, and are insertedly mounted to the case 1 through a groove (not shown) configured for the first elastic member 5 and the second elastic member 6 to be mounted to the case 1. The first elastic member 5 and the second elastic member 6 are compressed through a pre-loading.

The driving portion 10 includes a stator 12, a rotator 11 rotatively supported at an inside the stator 12, and a rotary shaft 13 press-fitted to the rotator 11. As a power is applied to the stator 12, the rotator 11 is rotated by an electromagnetic force, and the rotary shaft 13 integrally formed with the rotator 11 through press-fitting delivers the rotation force to the compression portion 20.

The compression portion 20 includes an eccentric portion 21 formed at one side of a lower portion of the rotary shaft 13, a roller 22 insertedly installed at an outer side of the eccentric portion 21, and a cylinder 25 provided to form compression chambers 51 and 52 at which the roller 22 is accommodated. In addition, the compression portion 20 may include an upper portion bearing 23 and a lower portion bearing 24 that are provided to support the rotary shaft 13 while being coupled to an upper portion and a lower portion of the cylinder 25, respectively, to seal the compression chambers 51 and 52.

One side of the cylinder 25 is provided therein with a suction port 33 that is connected to the suction tube 40 connected to the accumulator 2 to supply refrigerant, and the other side of the cylinder 25 is provided with a discharging port (not shown) to guide the refrigerant gas compressed at the compression chambers 51 and 52 to an outside the compression chambers 51 and 52.

One side of the upper portion bearing 23 is provided with a discharging hole 231 that communicates with the discharging port such that the refrigerant gas guided to the discharging port is discharged to an outside. An upper portion of the upper portion bearing 23 at a side of the discharging hole 231 is provided with a valve apparatus (not shown) to open/close the discharging hole 231.

A carbon dioxide refrigerant and oil are introduced through the suction port 33 and are supplied to the compression chambers 51 and 52, and each of the compression chambers 51 and 52 is filled with the oil. The oil functions as to help the motion of the compression portion 20 smoothly.

The supporting member is configured to enable the driving portion 10 and the compression portion 20 to be spaced apart from the case 1 by a predetermined space. The driving portion 10 and the compression portion 20 are fastened to the case 1 through a fastening member 30.

As the driving portion 10 and the compression portion 20 are fastened to the case 1 through the fastening member 30 and the elastic members 5 and 6, vibration and noise may be reduced. In addition, the likeliness of the degradation of the performance by having the alignment twisted may be reduced.

An upper side of the fastening member 30 is fastened to the stator 12 of the driving portion 10 through bolting or press-fitting. A lower side of the fastening member 30 is fastened to the compression portion 20, and according to the illustration on FIG. 1, the lower side of the fastening member 30 is fastened to the upper portion bearing 23 through bolting or press-fitting. In a case when the lower side of the fastening member 30 is fastened to the upper portion bearing 23, the upper portion bearing 23 is extended in sideways for the fastening with the fastening member 30. The fastening member 30 may be fastened to the cylinder 25, and in the case as such, the upper portion bearing 23 may not need to be extended.

In a case when the fastening member 30 is fastened to the cylinder 25, as the cylinder 25 is formed with material having rigidity higher than that of the upper portion bearing 23, the likeliness of deformation thereof is low. However, in a case when the fastening member 30 is fastened to the upper portion bearing 23, as the upper portion bearing 23, unlike the cylinder 25, does not directly affect the performance of the rotary compressor 100, the performance and the reliability of the rotary compressor 100 is not largely affected even in a case of an occurrence of a deformation of the upper portion bearing 23.

The fastening member 30 may include a hole 31 to discharge the high-pressure refrigerant. In a case when the high-pressure refrigerant is discharged through the hole 31, as the high-pressure refrigerant is discharged through a larger space, the flux of discharged oil may be reduced, compared to the conventional rotary compressor.

The suction tube 40 configured to supply the refrigerant gas from the accumulator 2 to the compressor portion 20 may be formed with flexible material to prevent the noise and vibration of the driving portion 10 and the compression portion 20 from being delivered to the case 1. A rubber tube, a type of Teflon tube, as an example, may be used.

The fastening member 30 needs a rigidity corresponding to the case 1, and thus the fastening member 30 may be formed with material that is the same as the material of the case 1. Steel, as an example, may be used.

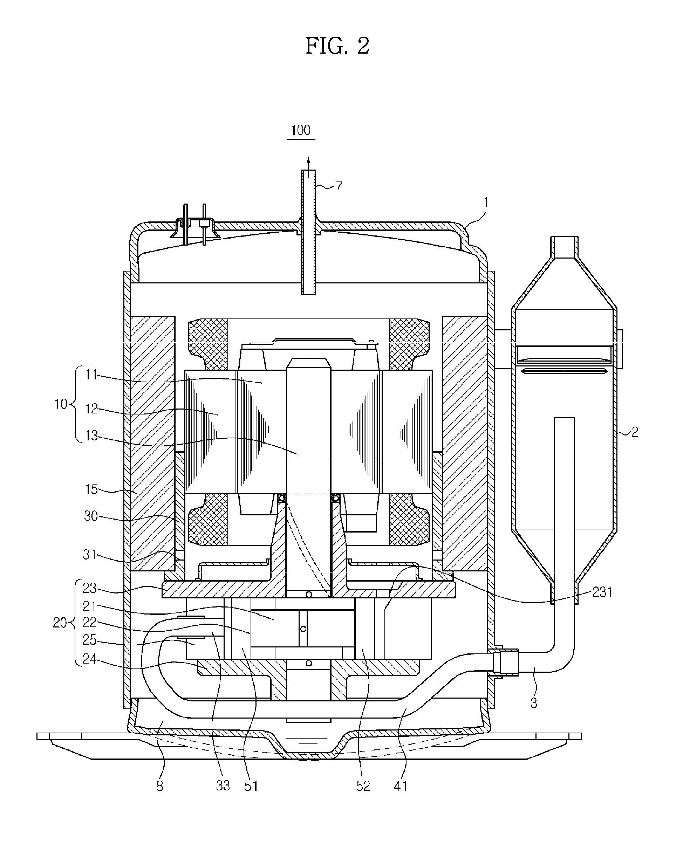

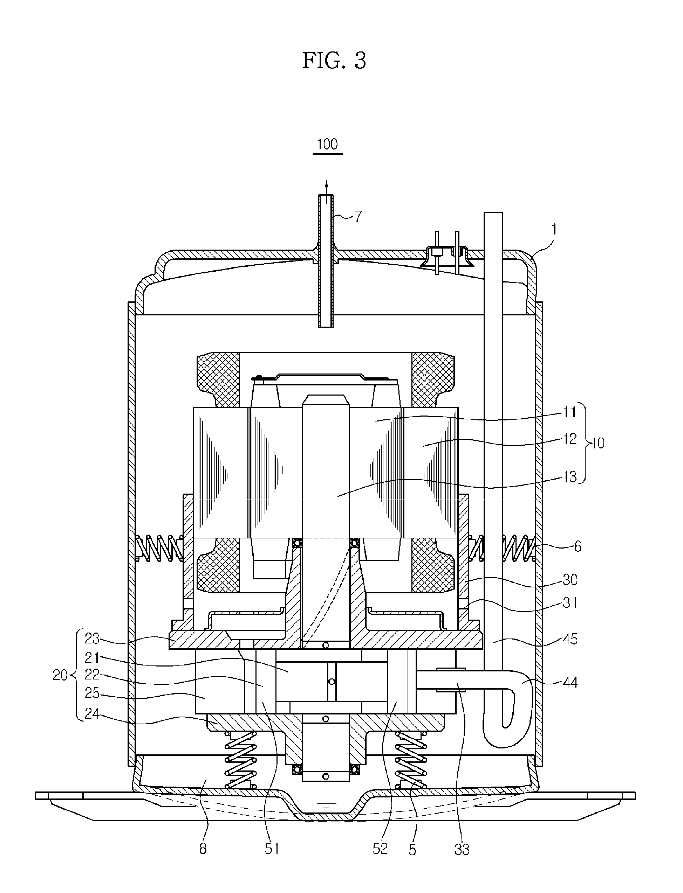

FIG. 2 is a drawing illustrating a rotary compressor in accordance with another embodiment of the present disclosure, and FIG. 3 is a drawing illustrating a rotary compressor in accordance with still another embodiment of the present disclosure. The embodiment illustrated on FIG. 2 represents a case when a damper 15 is used as a supporting member. Even in a case when the damper 15 is used as the supporting member, vibration and noise may be reduced similar to the case when an elastic member is used as the supporting member. One side of the damper 15 is press-fitted to the case 1, and the other side of the damper 15 is press-fitted or bolted to the fastening member 30.

In addition, the suction tube 41 is formed in an elongated manner in length thereof and is bent at an inside the case 1, and is connected to the accumulator 2 through a lower side of the case 1. As the suction tube 41 has a great length, vibration is eased even if the driving portion 10 and the compression portion 20 are moved. In addition, in the case as such, the material forming the suction tube 41 is not limited to flexible material.

The embodiment illustrated on FIG. 3 represents a case where suction tubes 48 and 49 are formed in an elongated manner at an inside of the case 1 so as to be connected to an outside of the case 1. As the suction tubes 48 and 49 are formed in an elongated manner, the delivery of the vibration of the driving portion 10 and the compression portion 20 to the case 1 may be prevented. In addition, since a portion 49 of the suction tubes 48 and 49, which is bent to connect to an upper portion of the case 1, performs similar to the accumulator, the accumulator may be omitted, and thereby, the compressor may be reduced in size.

For the rotary compressor 100 according to the embodiment of the present disclosure, the compression portion 20 is assembled, the rotator 11 of the driving portion 10 is inserted into rotary shaft 13, and a fixation member (not shown) is inserted in between the rotator 11 and the stator 12 of the driving portion 10 to form a space therebetween, thereby assembling the driving portion 10.

The stator 12 of the driving portion 10 is assembled to the fastening member 20 that connects the driving portion 10 to the compression portion 20, the compression member 20 is coupled to the fastening member 30, and the fixation member is separated from the driving portion 10. The fastening member 30 may be assembled to the cylinder of the compressor portion 20. The fastening member 30 may be assembled to the upper portion bearing 23 provided at the compression portion 20, and for such, a portion of the upper portion bearing 23 making contact with the compression portion 20 is needed to be expanded.

The fastening member 30 may be fastened to the compression portion 20 and the driving portion 10 through the press-fitting using heat.

An assembly of the driving portion 10 and the compression portion 20 may be mounted to the supporting member mounted at an inside the case 1.

In the method as such, a channel of the discharged refrigerant may be formed, thereby reducing the flux of discharged oil of the compressor. In addition, as the driving portion 10 is not press-fitted to the case 1, the likeliness of the vibration and noise of the rotary compressor 100 delivered to an outside through the case 1 is reduced.

Although a few embodiments of the present invention have been shown and described, it would be appreciated by those skilled in the art that changes may be made in these embodiments without departing from the principles of the invention, the scope of which is defined in the claims.

## Claims

1. A rotary compressor, comprising:
a case forming an external appearance of the rotary compressor;
a driving portion provided at an inner side of the case, and having a stator fixed to the case, a rotator rotatively provided at an inside the stator, and a rotary shaft that is press-fitted to the rotator;
a compression portion provided at an inner side of the case, and having an eccentric portion provided at a lower portion of the rotary shaft, a roller rotatively inserted into an outer side of the eccentric portion, a cylinder accommodating the roller and provided for a compression chamber to be formed therein, and a vane configured to divide the compression chamber;
a fastening member configured to connect the driving portion to the compression portion; and
a supporting member configured to connect the compression portion to the case to support the compression portion.

2. The rotary compressor of claim 1, wherein the supporting member comprises a first elastic member to support the compression portion, and a second elastic member to connect the fastening member to the case.

3. The rotary compressor of claim 1, wherein the supporting member is a damper configured to couple the fastening member to the case and to absorb vibration.

4. The rotary compressor of claim 1, 2 or 3, further comprising:
an upper portion bearing coupled to an upper portion of the cylinder and configured to support the rotary shaft, and a lower portion bearing coupled to a lower portion of the cylinder and configured to support the rotary shaft, and
one of both sides of the fastening member is coupled to the stator of the driving portion.

5. The rotary compressor of claim 4, wherein the other side of the fastening member is coupled to the upper portion bearing.

6. The rotary compressor of claim 4, wherein the other side of the fastening member is coupled to the cylinder.

7. The rotary compressor of any one of the preceding claims, wherein at least one portion of the fastening member is provided with a hole used as a channel of refrigerant.

8. The rotary compressor of any one of the preceding claims, further comprising:
an accumulator configured to filter a liquefied refrigerant, and a suction tube configured to supply refrigerant gas from the accumulator to the compression portion, wherein the suction tube is formed with flexible material to prevent vibration and noise of the compression portion from being delivered to the case.

9. The rotary compressor of any one of claims 1 to 7, further comprising:
a suction tube to supply refrigerant gas to the compression portion,
wherein the suction tube is formed in an elongated manner so that the suction tube is bent at an inside the case to prevent noise and vibration of the compression portion from being delivered to the case.

10. A method of manufacturing a rotary compressor having a case forming an external appearance of the rotary compressor, a compression portion and a driving portion therein, the method comprising:
assembling the compression portion;
inserting a rotator of the driving portion into a rotary shaft;
assembling the driving portion to the compression portion by inserting a fixation member configured to maintain a distance in between the rotator and a stator of the driving portion;
assembling the stator of the driving portion to a fastening member, which connects the driving portion to the compression portion;
fastening the compression portion to the fastening member;
separating the fixation member from the driving portion, and
mounting an assembly of the driving portion and the compression portion to an elastic member at an inside the case.

11. The method of claim 10, wherein the fastening member is assembled to a cylinder provided at the compression portion.

12. The method of claim 10, wherein the fastening member is assembled to an upper portion bearing provided at the compression portion.

13. The method of claim 10, 11 or 12, wherein the fastening member is fastened through a press-fitting using heat.

14. The method of claim 10, 11 or 12, wherein the fastening member is fastened by a coupling member.
